# EUROPEAN PATENT APPLICATION

(11) **EP 4 276 471 A1**
(43) Date of publication of application: **15.11.2023**
(21) Application number: 21917557.7
(22) Date of filing: 22.10.2021
(51) Int. Cl.: G01N 35/10

(54) **AUTOMATIC ANALYSIS DEVICE AND METHOD FOR CONTROLLING SAME**

(30) Priority: 06.01.2021 JP 2021000918
(71) Applicant: HITACHI HIGH-TECH CORPORATION, Tokyo 105-6409 (JP)
(72) Inventor: SASAKI Airi, Tokyo 105-6409 (JP); IIJIMA Masahiko, Tokyo 105-6409 (JP); TAKAHASHI Kenichi, Tokyo 105-6409 (JP); OOTAKI Tomotada, Tokyo 105-6409 (JP); SAGAE Nozomi, Tokyo 105-6409 (JP)
(74) Representative: Strehl Schübel-Hopf & Partner
(86) International application number: PCT/JP2021/039034
(87) International publication number: WO 2022/149332

(57) **Abstract**

Provided are: an automatic analysis device capable of suppressing the mixing in of a suspended matter in an upper layer sample to be dispensed from a specimen container to a reaction container; and a method for controlling the automatic analysis device. The automatic analysis device analyzes a specimen, said automatic analysis device being characterized by comprising: a specimen dispensing probe that dispenses the upper layer sample of a specimen which has been separated into the upper layer sample and a lower layer sample, from a specimen container containing the specimen to a reaction container; and a control unit that controls the operation of the specimen dispensing probe, wherein the control unit causes the specimen dispensing probe to remove part of the surface layer of the upper layer sample and/or apply vibrations to the surface layer of the upper layer sample and then dispense the upper layer sample from the specimen container to the reaction container for a specific test.

## Description

### Technical Field

The present invention relates to an automatic analysis device for analyzing a specimen such as blood or urine.

### Background Art

The automatic analysis device is a device that analyzes a specimen such as blood or urine supplied from a patient, and is used in a hospital and an inspection facility. When the specimen is blood, components such as plasma are separated, as an upper layer sample, from hemocyte components and the like in the specimen container by a centrifugal separator or the like, and the upper layer sample, which is dispensed by being aspirated from the specimen container and being discharged to a reaction container using the specimen dispensing probe, is analyzed after being reacted with a reagent. A part of the hemocyte components that serve as a lower layer sample is suspended in a surface layer of the upper layer sample in the specimen container, and the suspended matter adversely affects a specific test, for example, measurement of a lactate dehydrogenase (LD), and causes an abnormal value. Therefore, when dispensing the upper layer sample for the specific test, it is desirable to prevent mixing of the suspended matter.

PTL 1 discloses an automatic analysis device that controls, based on an analysis value of a component that is contained in a specimen before centrifugation and affects a specific test, a position at which a specimen dispensing probe is stopped in an upper layer sample after the centrifugation. That is, by setting a position at which the specimen dispensing probe is stopped when the analysis value exceeds an upper limit value to be lower than a position when the analysis value is equal to or less than the upper limit value, it is possible to suppress the mixing of the component that is suspended in the surface layer of the upper layer sample and affects the specific test.

### Citation List

### Patent Literature

PTL 1: JP5931540B

### Summary of Invention

### Technical Problem

However, in PTL 1, there is no consideration for mixing of a suspended matter adhering to an outer wall of the specimen dispensing probe when the upper layer sample is aspirated from the specimen container. The suspended matter adhering to the outer wall of the specimen dispensing probe may be mixed into the upper layer sample when the upper layer sample discharged to the reaction container flows around the outer wall of the specimen dispensing probe.

Therefore, an object of the invention is to provide an automatic analysis device capable of suppressing mixing of a suspended matter in an upper layer sample to be dispensed from a specimen container to a reaction container, and a method for controlling the same.

### Solution to Problem

In order to achieve the above object, the invention provides an automatic analysis device for analyzing a specimen, the automatic analysis device includes a specimen dispensing probe configured to dispense an upper layer sample of a specimen, that is separated into the upper layer sample and a lower layer sample, from a specimen container storing the specimen into a reaction container; and a control unit configured to control an operation of the specimen dispensing probe, and the control unit causes the specimen dispensing probe to remove a part of a surface layer of the upper layer sample or apply a vibration to the surface layer of the upper layer sample, and then dispense the upper layer sample from the specimen container to the reaction container for a specific test.

Further, the invention provides a method for controlling an automatic analysis device for analyzing a specimen, and the method includes: causing a specimen dispensing probe, configured to dispense an upper layer sample of a specimen, that is separated into the upper layer sample and a lower layer sample, from a specimen container storing the specimen into a reaction container, to remove a part of a surface layer of the upper layer sample or apply a vibration to the surface layer of the upper layer sample, and then dispense the upper layer sample from the specimen container to the reaction container for a specific test.

### Advantageous Effects of Invention

According to the invention, it is possible to provide an automatic analysis device capable of suppressing mixing of a suspended matter in an upper layer sample to be dispensed from a specimen container to a reaction container, and a method for controlling the same.

### Brief Description of Drawings

[FIG. 1] FIG. 1 is a schematic diagram illustrating a configuration example of an automatic analysis device.
[FIG. 2] FIG. 2 is a diagram illustrating a specimen that is separated into an upper layer sample and a lower layer sample in a specimen container.
[FIG. 3] FIG. 3 is a diagram illustrating an example of a flow of a process according to Embodiment 1.
[FIG. 4] FIG. 4 is a diagram illustrating an example of a flow of a process according to Embodiment 2.
[FIG. 5] FIG. 5 is a diagram illustrating an example of a flow of a process according to Embodiment 3.
[FIG. 6] FIG. 6 is a diagram illustrating an example of a screen for selecting an operation of a specimen dispensing probe.

### Description of Embodiments

Preferred embodiments of an automatic analysis device and a method for controlling the same according to the invention will be described below with reference to the accompanying drawings. In the following description and the accompanying drawings, elements that have the same function and configuration are denoted by the same reference numerals, and repeated descriptions thereof are omitted.

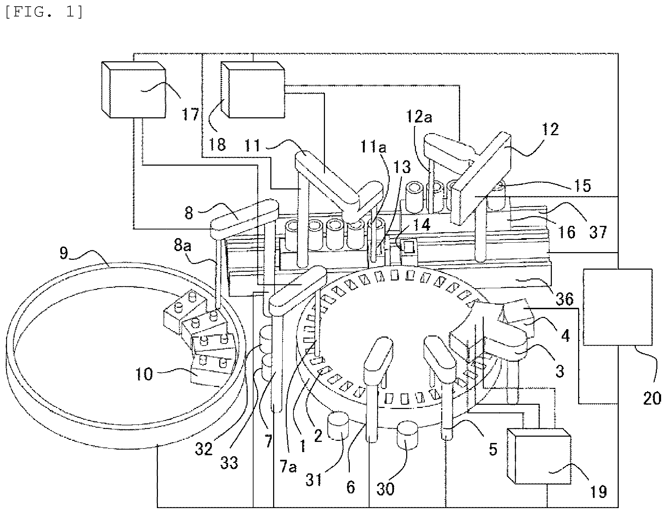

An example of an overall configuration of the automatic analysis device will be described with reference to FIG. 1. The automatic analysis device is a device that analyzes a specimen such as blood or urine supplied from a patient, and includes conveyance paths 36, 37, specimen dispensing mechanisms 11, 12, a reagent disk 9, reagent dispensing mechanisms 7, 8, a reaction disk 1, a spectrophotometer 4, and a control unit 20. The parts will be described below.

A specimen housing rack 16 on which a plurality of specimen containers 15 for storing the specimen are mounted is conveyed along the conveyance paths 36, 37 to a position accessible by each of the specimen dispensing mechanisms 11, 12. The specimen stored in the specimen containers 15 is dispensed into reaction containers 2 held on the reaction disk 1 by the specimen dispensing mechanisms 11, 12.

The specimen dispensing mechanisms 11, 12 respectively include specimen dispensing probes 11a, 12a each of which is connected to a specimen syringe 18, and are capable of performing a rotational movement in a horizontal plane and a vertical movement in a vertical direction. The specimen stored in the specimen container 15 is dispensed by being aspirated and discharged into the reaction container 2 by the specimen dispensing probes 11a, 12a when the specimen syringe 18 operates. After dispensing the specimen, the specimen dispensing probes 11a, 12a are respectively cleaned in cleaning tanks 13, 14 that are respectively disposed in movable ranges of the specimen dispensing mechanisms 11, 12.

The reagent disk 9 stores a plurality of reagent containers 10 for storing the reagent. In order to reduce deterioration of the reagent, the inside of the reagent disk 9 is kept at a temperature lower than room temperature. The reagent stored in the reagent containers 10 is dispensed into the reaction containers 2, into each of which the specimen is dispensed, by the reagent dispensing mechanisms 7, 8.

The reagent dispensing mechanisms 7, 8 respectively include reagent dispensing probes 7a, 8a each of which is connected to a reagent syringe 17, and are capable of performing a rotational movement in the horizontal plane and a vertical movement in the vertical direction. The reagent stored in the reagent containers 10 transferred to predetermined positions due to rotation of the reagent disk 9 is dispensed by being aspirated and discharged into the reaction container 2 by the reagent dispensing probes 7a, 8a when the reagent syringe 17 operates. After dispensing the reagent, the reagent dispensing probes 7a, 8a are respectively cleaned in cleaning tanks 32, 33 that are respectively disposed in movable ranges of the reagent dispensing mechanisms 7, 8.

The reaction disk 1 holds the plural reaction containers 2 in each of which a mixed liquid of the specimen and the reagent is stored, and is kept in a predetermined temperature range. The mixed liquid stored in the reaction containers 2 is stirred by stirring mechanisms 5, 6, the reaction disk 1 is kept at a predetermined temperature, and whereby the reaction proceeds to obtain a reaction liquid to be used for analysis. After stirring the mixed liquid, the stirring mechanisms 5, 6 are respectively cleaned in cleaning tanks 30, 31 that are respectively disposed in movable ranges of the stirring mechanisms 5, 6. Each of the reaction containers 2 arranged along an outer periphery of the circular reaction disk 1 is transferred, due to rotation of the reaction disk 1, to a position at which the specimen or the reagent is dispensed.

The spectrophotometer 4 is used to analyze the reaction liquid stored in the reaction containers 2. When light is emitted from a light source (not shown) to the reaction container 2 that stores the reaction liquid to be analyzed, transmitted light or scattered light of the reaction liquid is detected by the spectrophotometer 4 and transmitted to the control unit 20. Data relating to the detected transmitted light or scattered light is used to calculate a concentration of a predetermined component contained in the specimen, and the calculated concentration is output as an analysis result of the specimen. Further, after the analysis is performed, the reaction container 2 storing the reaction liquid is cleaned by a cleaning mechanism 3 connected to a cleaning pump 19.

The control unit 20 controls the operation of each part, receives input of the data necessary for the analysis to calculate the concentration of the predetermined component, and output data such as the calculated concentration. The control unit 20 may be dedicated hardware that is implemented by an application specific integrated circuit (ASIC), a field-programmable gate array (FPGA), or the like; or may be a computer that includes a micro-processing unit (MPU) for executing software. The data received by the control unit 20 is input via an input device such as a keyboard, a mouse, or a touch panel. Further, the data output from the control unit 20 is displayed on a display device such as a liquid crystal display or a touch panel, or is stored in a storage device such as a hard disk.

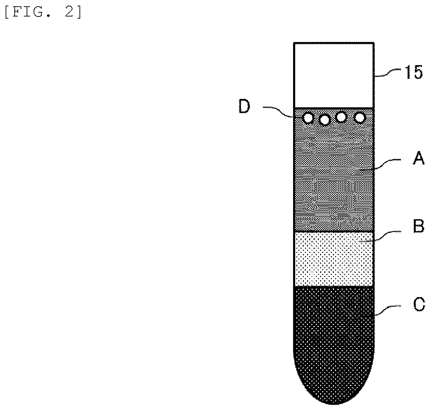

The specimen separated into the upper layer sample and the lower layer sample in the specimen container 15 will be described with reference to FIG. 2. When the specimen is blood, in the specimen container, an upper layer sample A containing plasma, serum, and the like is separated from a lower layer sample C containing hemocytes, platelets, and the like, by a centrifugal separator or the like. Depending on a type of the specimen container 15, a separating agent B is formed between the upper layer sample A and the lower layer sample C.

A suspended matter D is contained in a surface layer of the upper layer sample. The suspended matter D includes the hemocytes and the platelets contained in the lower layer sample C, or is a mixture of a coating agent on an inner wall of the specimen container 15 and the blood components, and often floats in a depth range of 2 mm from an upper surface of the upper layer sample A. Further, the suspended matter D adversely affects a specific test, for example, measurement of the LD or an alkaline phosphatase (ALP).

Therefore, in Embodiment 1, after a part of the surface layer of the upper layer sample A, in which the suspended matter D floats, is removed, the upper layer sample A is dispensed for the specific test. The part of the surface layer of the upper layer sample A removed prior to the dispensing for the specific test may be discarded after being aspirated by, for example, the specimen dispensing probes 11a, 12a, or may be used for a test other than the specific test. That is, when there is a test that is not adversely affected by the suspended matter D among a plurality of tests using the upper layer sample A separated from the lower layer sample C, the upper layer sample A into which the suspended matter D is mixed may be used for the test. By using the upper layer sample A in which the suspended matter D is mixed for the test that is not adversely affected by the suspended matter D, it is possible to save the specimen supplied from the patient.

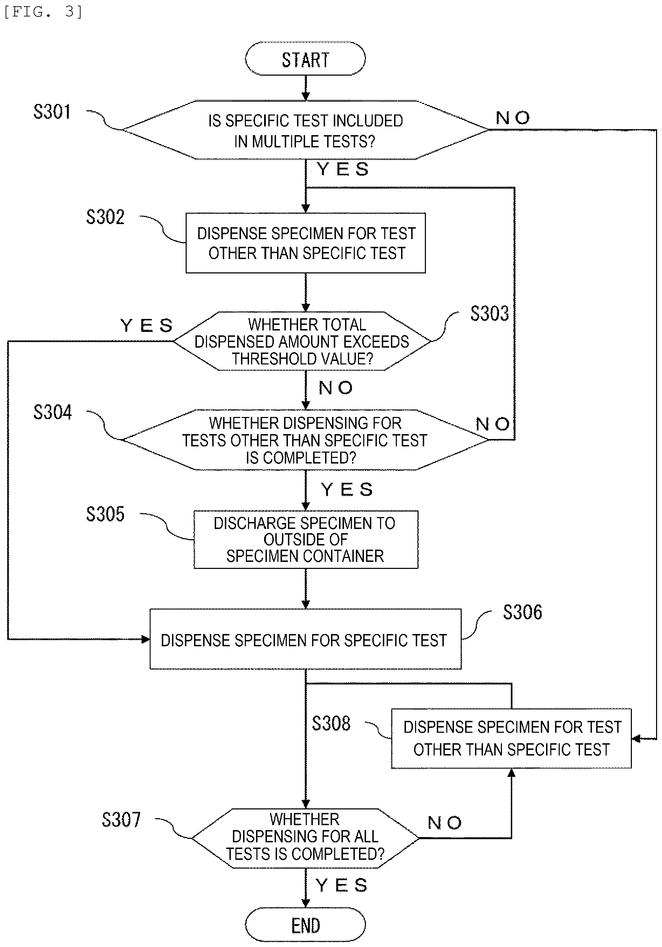

An example of a flow of a process according to Embodiment 1 will be described with reference to FIG. 3.

### (S301)

The control unit 20 determines whether there is a specific test, for example, a test that is adversely affected by the suspended matter D such as the measurement of the LD or the ALP, among the plurality of tests using the upper layer sample A separated from the lower layer sample C. If there is a specific test among the plurality of tests, the process proceeds to S302, and if not, the process proceeds to S307.

### (S302)

The control unit 20 causes each of the specimen dispensing probes 11a, 12a to operate to dispense the upper layer sample A from the specimen container 15 to the reaction container 2 for any test other than the specific test. The specimen dispensing probes 11a, 12a may be cleaned in the cleaning tanks 13, 14 each time the upper layer sample A is dispensed into the reaction container 2.

### (S303)

The control unit 20 calculates a total amount of the upper layer sample A dispensed up to S303, and determines whether the calculated total amount exceeds a threshold value. The calculated total amount may include a dummy aspiration amount at the time of first dispensing. If the total dispensed amount exceeds the threshold value, the process proceeds to step S306, and if not, the process proceeds to step S304.

The threshold value is determined based on a range of the suspended matter D floating in the surface layer of the upper layer sample A. For example, when the suspended matter D floats in a depth range of 2 mm from the upper surface of the upper layer sample A in the specimen container 15 having an inner diameter of 11 mm, 190 µL (≈ n × 5.5^2 × 2), which is a specimen amount corresponding to the depth of 2 mm, is determined as the threshold value. The threshold value may be stored in the storage device in advance and read as necessary, or may be input via the input device.

### (S304)

The control unit 20 determines whether the upper layer sample A is dispensed for all the tests other than the specific test. If the dispensing for all the tests other than the specific test is completed, the process proceeds to S305, and if not, the process returns to S302.

### (S305)

The control unit 20 causes the specimen dispensing probes 11a, 12a to operate to discharge the upper layer sample A to the outside of the specimen container 15, for example, to the cleaning tanks 13, 14, respectively. An amount of the upper layer sample A discharged to the outside of the specimen container 15 is set by subtracting the total amount calculated in S303 from the threshold value. That is, an amount of the upper layer sample A that is a sum of the discharge amount in S305 and the amount of the upper layer sample A dispensed up to S303 and exceeds the threshold value is removed from the specimen container 15.

### (S306)

The control unit 20 causes each of the specimen dispensing probes 11a, 12a to operate to dispense the upper layer sample A from the specimen container 15 to the reaction container 2 for the specific test. The specimen dispensing probes 11a, 12a are cleaned in the cleaning tanks 13, 14 prior to dispensing the upper layer sample A for the specific test, and the suspended matter D adhering to outer walls is removed.

### (S307)

The control unit 20 determines whether the upper layer sample A is dispensed for all the tests. If the dispensing for all the tests is completed, the flow of the process ends, and if there is a test for which the upper layer sample A is not dispensed, the process returns to S308.

### (S308)

The control unit 20 causes each of the specimen dispensing probes 11a, 12a to operate to dispense the upper layer sample A from the specimen container 15 to the reaction container 2 for any test other than the specific test. The specimen dispensing probes 11a, 12a may be cleaned in the cleaning tanks 13, 14 each time the upper layer sample A is dispensed into the reaction container 2.

According to the flow of the process described above, since a part of the surface layer of the upper layer sample A is removed prior to dispensing the specimen for the specific test, the adhering of the suspended matter D to the outer walls of the specimen dispensing probes 11a, 12a is suppressed, and the mixing of the suspended matter D into the upper layer sample A to be dispensed is suppressed. As a result, it is possible to prevent an abnormal value from being generated in the specific test, for example, the measurement of the LD or the ALP. In addition, since a part of the upper layer sample A removed prior to dispensing the specimen for the specific test is used for the tests other than the specific test, it is possible to reduce a consumption amount of the specimen.

### Embodiment 2

In Embodiment 1, the removal of a part of the surface layer of the upper layer sample A prior to dispensing of the specimen for the specific test is described. In order to suppress the adhering of the suspended matter D to the outer walls of the specimen dispensing probes 11a, 12a, the specimen may be dispensed for the specific test after the suspended matter D floating in the surface layer of the upper layer sample A is settled. In Embodiment 2, the settling of the suspended matter D by applying a vibration to the surface layer of the upper layer sample A prior to dispensing the specimen for a specific test will be described. Since a difference from Embodiment 1 is a flow of a process, the description of other contents is omitted.

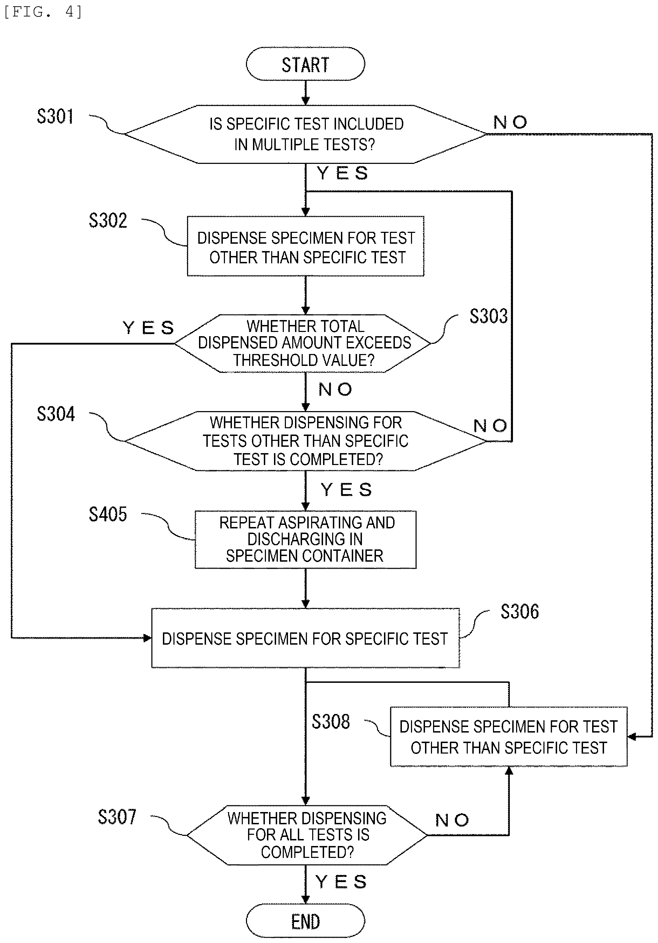

An example of the flow of the process according to Embodiment 2 will be described with reference to FIG. 4. The description of steps S301 to S304 and S306 to S308, which are the same processes as in Embodiment 1, is omitted, and step S405 that replaces step S305 in Embodiment 1 will be described.

### (S405)

The control unit 20 causes each of the specimen dispensing probes 11a, 12a to operate to repeat the aspirating and discharging of the upper layer sample A in the specimen container 15. The upper layer sample A to be aspirated is the surface layer in which the suspended matter D floats. By repeating the aspirating and discharging of the surface layer of the upper layer sample A in the specimen container 15, the vibration is applied to the surface layer of the upper layer sample A, and the suspended matter D floating in the surface layer is settled.

The number of repetitions of the aspirating and discharging and an aspiration amount are stored in the storage device in advance and read as necessary, or may be input via the input device. Further, the number of repetitions and the aspiration amount may be set based on an amount of the vibration applied to the surface layer of the upper layer sample A and a time required in S405. For example, in order to shorten the time required in S405, the number of repetitions may be reduced and the aspiration amount may be increased. However, the aspiration amount is set to such an extent that the lower layer sample C and the separating agent B do not mix with the upper layer sample A.

According to the flow of the process described above, since the vibration is applied to the surface layer of the upper layer sample A and the suspended matter D is settled prior to dispensing the specimen for the specific test, the adhering of the suspended matter D to the outer walls of the specimen dispensing probes 11a, 12a is suppressed. As a result, the mixing of the suspended matter D into the upper layer sample A to be dispensed is suppressed, and thus it is possible to prevent the abnormal value from being generated in the specific test. In addition, even when the amount used for the tests other than the specific test does not exceed the threshold value, the upper layer sample A is not discharged into the cleaning tanks 13, 14 and the like, so that the consumption amount of the specimen can be further reduced. Since the suspended matter D is settled by applying the vibration to the surface layer of the upper layer sample A, steps S301 to S304 in FIG. 4 are not essential.

### Embodiment 3

In Embodiment 2, the application of the vibration by repeating the aspirating and discharging of the surface layer of the upper layer sample A in order to settle the suspended matter D prior to dispensing of the specimen for the specific test is described. In order to apply the vibration to the surface layer of the upper layer sample A, the specimen dispensing probes 11a, 12a may be brought into contact with the surface layer of the upper layer sample A a plurality of times. In Embodiment 3, the application of the vibration by bringing the specimen dispensing probes 11a, 12a into contact with the surface layer of the upper layer sample A a plurality of times in order to settle the suspended matter D prior to dispensing of the specimen for the specific test will be described. Since a difference from Embodiment 1 and Embodiment 2 is a flow of a process, the description of other contents is omitted.

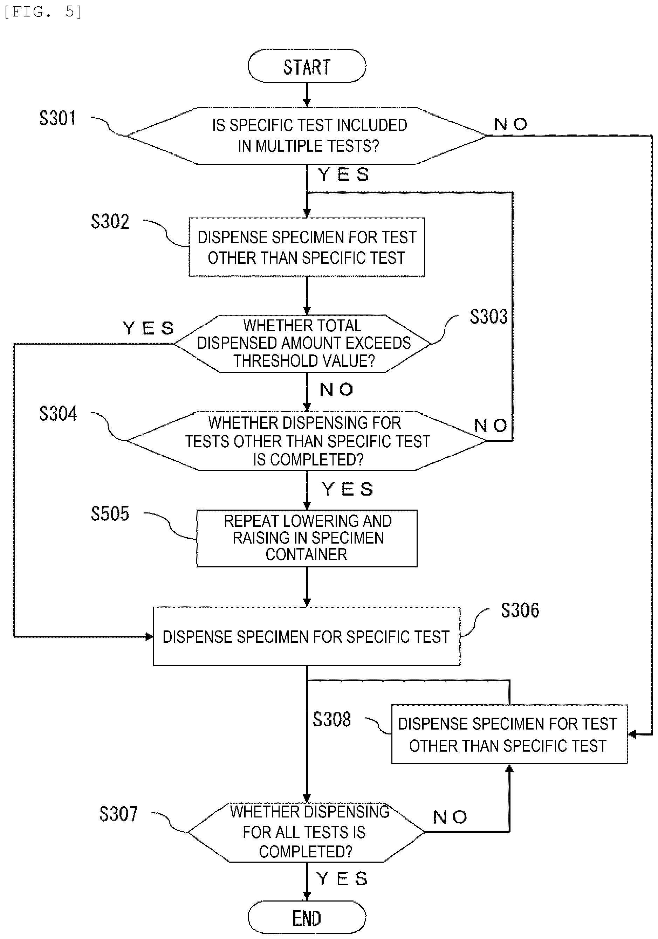

An example of the flow of the process according to Embodiment 3 will be described with reference to FIG. 5. The description of steps S301 to S304 and S306 to S308, which are the same processes as in Embodiment 1, is omitted, and step S505 that replaces step S405 in Embodiment 2 will be described.

### (S505)

The control unit 20 causes each of the specimen dispensing probes 11a, 12a to operate to repeat lowering and raising in the specimen container 15 so as to come into contact with the surface layer of the upper layer sample A. Note that the specimen dispensing probes 11a, 12a are is not lowered below the surface layer in which the suspended matter D floats. By bringing the specimen dispensing probes 11a, 12a into contact with the surface layer of the upper layer sample A a plurality of times, the vibration is applied to the surface layer of the upper layer sample A, and the suspended matter D floating in the surface layer is settled. The number of repetitions of the lowering and raising may be stored in the storage device in advance and read as necessary, or may be input via the input device.

According to the flow of the process described above, since the vibration is applied to the surface layer of the upper layer sample A and the suspended matter D is settled prior to dispensing of the specimen for the specific test, the adhering of the suspended matter D to the outer walls of the specimen dispensing probes 11a, 12a is suppressed. As a result, the mixing of the suspended matter D into the upper layer sample A to be dispensed is suppressed, and thus it is possible to prevent the abnormal value from being generated in the specific test. In addition, because of a simple operation of merely bringing the specimen dispensing probes 11a, 12a into contact with the surface layer of the upper layer sample A plural times without performing the aspirating and discharging of the upper layer sample A it is possible to shorten the time required for applying the vibration. Since the suspended matter D is settled by applying the vibration to the surface layer of the upper layer sample A, steps S301 to S304 in FIG. 5 are not essential.

The three embodiments of the invention are described above. Further, the three embodiments may be combined as appropriate. For example, one of the three embodiments may be selected from a screen by an operator.

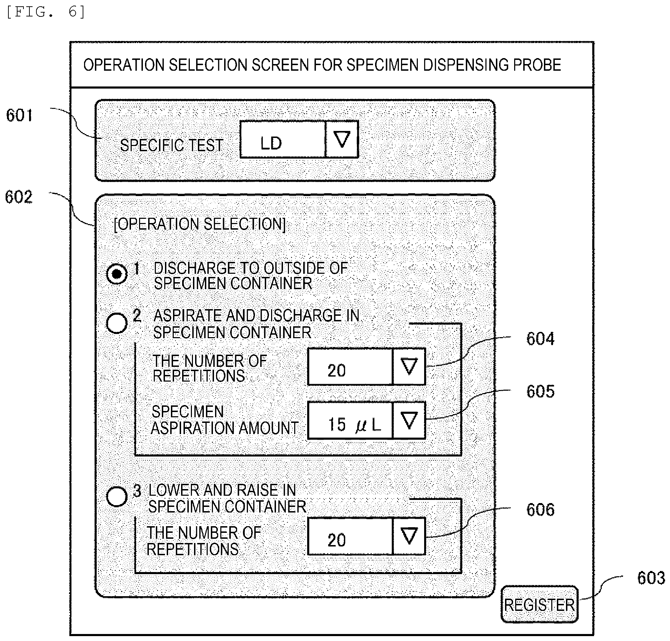

An example of the screen for selecting an operation of the specimen dispensing probe will be described with reference to FIG. 6. The screen shown in FIG. 6 includes a test selection unit 601, an operation selection unit 602, and a register button 603. The specific test is selected from a pull-down menu by the test selection unit 601. FIG. 6 illustrates an example in which the LD is selected as the specific test.

By the operation selection unit 602, an operation of each of the specimen dispensing probes 11a, 12a is selected from three operations including "discharge to outside of specimen container", "aspirate and discharge in specimen container", and "lower and raise in specimen container". The "discharge to outside of specimen container" corresponds to Embodiment 1, the "aspirate and discharge in specimen container" corresponds to Embodiment 2, and the "lower and raise in specimen container" corresponds to Embodiment 3. FIG. 6 illustrates an example in which the "discharge to outside of specimen container", that is, Embodiment 1 is selected as the operations of the specimen dispensing probes 11a, 12a.

The operation selection unit 602 includes a number-of-repetitions setting unit 604, a specimen aspiration amount setting unit 605, and a number-of-repetitions setting unit 606. By the number-of-repetitions setting unit 604, the number of repetitions of the aspirating and discharging of the specimen in the specimen container 15 is set. FIG. 6 illustrates an example in which the number of repetitions is set to 20 times. By the specimen aspiration amount setting unit 605, the amount of the specimen to be aspirated is set. FIG. 6 illustrates an example in which the specimen aspiration amount is set to 15 µL. By the number-of-repetitions setting unit 606, the number of repetitions of the lowering and raising of the specimen dispensing probes 11a, 12a in the specimen container 15 is set. FIG. 6 illustrates an example in which the number of repetitions is set to 20 times.

When the register button 603 is pressed, the operations of the specimen dispensing probes 11a, 12a are controlled in accordance with the selection in the operation selection unit 602. For example, when the "discharge to outside of specimen container" is selected, the flow of the process illustrated in FIG. 3 is executed. When the "aspirate and discharge in specimen container" is selected, the flow of the process illustrated in FIG. 4 is executed while the values set by the number-of-repetitions setting unit 604 and the specimen aspiration amount setting unit 605 are used. Further, when the "lower and raise in specimen container" is selected, the flow of the process illustrated in FIG. 5 is executed while the value set by the number-of-repetitions setting unit 606 is used.

The invention is not limited to the above embodiments, and elements may be modified without departing from the scope of the invention. Further, several elements may be deleted from all the elements shown in the above embodiments.

### Reference Signs List

1: reaction disk
2: reaction container
3: cleaning mechanism
4: spectrophotometer
5, 6: stirring mechanism
7, 8: reagent dispensing mechanism
7a, 8a: reagent dispensing probe
9: reagent disk
10: reagent container
11, 12: specimen dispensing mechanism
11a, 12a: specimen dispensing probe
13, 14: cleaning tank
15: specimen container
16: specimen housing rack
17: reagent syringe
18: specimen syringe
19: cleaning pump
20: control unit
30, 31, 32, 33: cleaning tank
36, 37: conveyance path
601: test selection unit
602: operation selection unit
603: register button
604: number-of-repetitions setting unit
605: specimen aspiration amount setting unit
606: number-of-repetitions setting unit

## Claims

1. An automatic analysis device for analyzing a specimen, comprising:
a specimen dispensing probe configured to dispense an upper layer sample of a specimen, that is separated into the upper layer sample and a lower layer sample, from a specimen container storing the specimen into a reaction container; and
a control unit configured to control an operation of the specimen dispensing probe, wherein
the control unit causes the specimen dispensing probe to remove a part of a surface layer of the upper layer sample or apply a vibration to the surface layer of the upper layer sample, and then dispense the upper layer sample from the specimen container to the reaction container for a specific test.

2. The automatic analysis device according to claim 1, wherein
the control unit causes the specimen dispensing probe to remove the upper layer sample of an amount exceeding a threshold value from the surface layer, and then dispense the upper layer sample for the specific test.

3. The automatic analysis device according to claim 2, wherein
the threshold value is set based on a depth of a suspended matter floating in the surface layer of the upper layer sample and an inner diameter of the specimen container.

4. The automatic analysis device according to claim 2, wherein
the part of the upper layer sample removed from the surface layer is used for a test other than the specific test.

5. The automatic analysis device according to claim 1, wherein
the specific test is measurement of a lactate dehydrogenase or an alkaline phosphatase.

6. The automatic analysis device according to claim 1, wherein
the control unit causes the specimen dispensing probe to repeat aspirating and discharging with respect to the surface layer so as to apply a vibration to the surface layer, and then dispense the upper layer sample for the specific test.

7. The automatic analysis device according to claim 1, wherein
the control unit causes the specimen dispensing probe to repeat lowering and raising to come into contact with the surface layer a plurality of times so as to apply a vibration to the surface layer, and then dispense the upper layer sample for the specific test.

8. A method for controlling an automatic analysis device for analyzing a specimen, the method comprising:
causing a specimen dispensing probe, configured to dispense an upper layer sample of a specimen, that is separated into the upper layer sample and a lower layer sample, from a specimen container storing the specimen into a reaction container, to remove a part of a surface layer of the upper layer sample or apply a vibration to the surface layer of the upper layer sample, and then dispense the upper layer sample from the specimen container to the reaction container for a specific test.
